Europäisches Patentamt

European Patent Office

Office européen des brevets

(19)

(11) Veröffentlichungsnummer : **0 097 265**
**B1**

(12) **EUROPÄISCHE PATENTSCHRIFT**

(45) Veröffentlichungstag der Patentschrift :
**30.12.86**

(21) Anmeldenummer : **83105353.3**

(22) Anmeldetag : **31.05.83**

(51) Int. Cl.⁴ : **F 24 H 9/18**, F 24 H 1/00,
F 24 H 1/18, A 47 J 36/24,
H 05 B 3/82

(54) **Heizelement zur Beheizung von Behältern.**

(30) Priorität : **05.06.82 DE 3221347**

(43) Veröffentlichungstag der Anmeldung :
**04.01.84 Patentblatt 84/01**

(45) Bekanntmachung des Hinweises auf die Patenterteilung : **30.12.86 Patentblatt 86/52**

(84) Benannte Vertragsstaaten :
**AT CH DE FR GB IT LI NL SE**

(56) Entgegenhaltungen :
**CH-A- 100 902**
**CH-A- 169 295**
**DE-A- 2 456 511**
**DE-A- 2 836 247**
**DE-A- 2 909 238**
**DE-C- 630 098**
**DE-U- 7 229 012**

(73) Patentinhaber : **E.G.O. Elektro-Geräte Blanc u. Fischer**
**Rote-Tor-Strasse Postfach 11 80**
**D-7519 Oberderdingen (DE)**

(72) Erfinder : **Knauss, Hermann**
**Sonnenhalde 6**
**D-7519 Oberderdingen (DE)**

(74) Vertreter : **Patentanwälte Ruff und Beier**
**Neckarstrasse 50**
**D-7000 Stuttgart 1 (DE)**

EP 0 097 265 B1

## Beschreibung

Die Erfindung betrifft ein Heizelement zur Beheizung von Behältern unter Verwendung von Rohrheizkörpern.

Üblicherweise werden Behälter wie Elektroboiler, Waschmaschinen, Reinigungsanlagen oder Friteusen von in den Behälter hineingeführten Rohrheizkörpern beheizt. Diese sind üblicherweise an einem im unteren Teil des Behälters eingesetzten Deckel befestigt und ragen in den zu beheizenden Raum hinein. Diese Anordnung ist thermisch sehr vorteilhaft, kann aber Schwierigkeiten wegen Verkalkung und Regelung, insbesondere bzgl. des bei den meisten dieser Behälter erforderlichen Trockengehschutzes machen. Ferner ist eine Reinigung des Behälters schwierig, wenn der Rohrheizkörper in diesen hineinragt.

Aus der DE-A-29 09 238 ist ein Behälter in Form eines Teekessels bekanntgeworden, dessen eingelöteter oder eingeschweißter Boden aus einer Doppelschale besteht, zwischen die dreiecksförmige Rohrheizkörper eingelötet sind, die mit einer Dreiecksseite an der zum Behälter gewandten Seite anliegen. Der Bodenbereich wird durch eine schüsselförmige Abdeckung abgeschlossen. Diese Ausführung erfordert es, die Rohrheizkörper während der Fertigung des Behälters mit anzulöten und ermöglicht keine nachträgliche Montage oder Reparatur.

Aus der DE-A-24 56 511 ist ein Einsatz in Form einer Glaskuppel bekanntgeworden, an dessen Innenseite Heizelemente in Form eines Folienheizkörpers oder offener Strahlungsheizwendeln angeordnet sind. Dieser Heizeinsatz wird in eine Behälteröffnung eingesetzt und rückseitig mit einem Deckel abgeschlossen, der eine Isolation enthält. Die Heizkörper werden offensichtlich von dieser Isolation an den Glaseinsatz angedrückt. Bei diesem Einsatz ist sicherlich die Korrosionsbeständigkeit sehr gut, aber hohe Heizflächenbelastungen sind kaum möglich. Ferner ist diese Anordnung infolge der von der Rückseite her insbesondere gegen Feuchtigkeit ungeschützten Anordnung der Heizelemente für rauhen Betrieb in feuchtigkeitsgefährdeten Räumen, beispielsweise in der Küche oder im Keller, ungeeignet.

Aus der CH-A-169 295 ist die Beheizung eines Behälters durch offene Heizwendeln bekanntgeworden, die an der Außenseite des Behälters angeordnet und von einer Isolation hinterlegt sind. In die Behälterwandung sind, teilweise unter Zwischenschaltung eines Schmelzmetalls, Fühler von Thermostaten eingebettet, die somit hauptsächlich an die Behälterwand thermisch angekoppelt sind. Bei dieser Anordnung sind die Temperaturfühler besonders schwierig anzubringen, insbesondere, wenn man an die Abdichtung des das Schmelzmetall enthaltenen Raumes denkt.

Aufgabe der Erfindung ist es, ein Heizelement zur Beheizung von Behältern zu schaffen, bei dem die Beheizung leicht montierbar und ggf. auswechselbar angebracht werden kann und bei dem bei verbesserten Betriebseigenschaften Probleme bezüglich Verkalkung, Reinigungsmöglichkeiten etc. nicht auftreten.

Diese Aufgabe wird bei einem Heizelement zur Beheizung von Behältern unter Verwendung von Rohrheizkörpern, die auf die Außenseite eines Behälterwandteils großflächig anliegend aufgelötet sind, erfindungsgemäß dadurch gelöst, daß der Behälterwandteil ein abgedichtet in eine Behälteröffnung eingesetzter, aus Metall bestehender Einsatz ist, an dem ein Temperaturbegrenzer vorgesehen ist, dessen Temperaturfühler mit dem Rohrheizkörper sowie dem Einsatz thermisch verbunden außerhalb des zu beheizenden Mediums an den Rohrheizkörper außen angrenzend angeordnet ist.

Nunmehr liegt der gesamte Rohrheizkörper außerhalb des Behälters, und die beheizte Fläche ist von der Behälterseite her eine im wesentlichen glatte Fläche. Auf ihr platzen eventuelle Kalkablagerungen besonders leicht ab, und sie ist zu reinigen, ohne daß die Gefahr besteht, daß die eigentliche Heizung, nämlich die Rohrheizkörper, beschädigt werden.

Es hat sich gezeigt, daß der Wirkungsgrad dieser Beheizung nicht merklich schlechter ist als die eines Rohrheizkörpers, der ganz im Inneren angeordnet ist. Es lassen sich auch sehr hohe Heizflächenbelastungen verwirklichen, da die Verkalkungsgefahr geringer ist. Die Auflötung erfolgt mittels eines hochtemperaturfesten Lotes für rostfreien Stahl, vorzugsweise eines Nickel-Pastenlotes. Diese hier generell als Lötung im herkömmlichen Sinne, weil das verwendete Lot durch Eindiffundieren in das Grundmaterial und ähnliche Materialzusammensetzung eine so innige Verbindung mit diesem eingeht, daß kaum noch eine thermische Trennung der verlöteten Teile möglich ist. Man kann daher auch von einem Anlegieren sprechen. Der Einsatz besteht bevorzugt aus einem Prägeteil aus rostfreiem Stahl, ebenso wie der Mantel des Rohrheizkörpers.

Bei bisherigen Rohrheizkörpern war es häufig schwierig, einen Trockengehschutz so vorzusehen, daß er schon dann ansprach, wenn die Flüssigkeit im Behälter einen bestimmten Mindeststand erreicht hatte. Meist verspritzte der letzte Rest der Flüssigkeit so heftig, daß der Trockengehschutz stets wieder auf eine Temperatur unter seiner Ansprechtemperatur heruntergekühlt wurde. Der als Trockengehschutz verwendbare Temperaturbegrenzer ist mit den Rohrheizkörpern bzw. dem Einsatz thermisch verbunden und außerhalb der zu beheizenden Flüssigkeit angeordnet und vermeidet diesen Nachteil. Hier wird also wirklich die Temperatur der Beheizung abgefühlt und nicht diejenige der Flüssigkeit, so daß der Temperaturbegrenzer beispielsweise auch dann ansprechen würde, wenn durch einen anderen Umstand die Wärmeübertragung zum Behälter hin unterbrochen ist, beispielsweise beim Absetzen eines versehentlich in den Behälter gelangten Feststoffes auf dem Heizelement.

Der Einsatz kann als eine im wesentlichen ebene Scheibe ausgebildet sein. Auf ihr kann beispielsweise spiralig ein Rohrheizkörper aufgelötet sein. Diese Anordnung eignet sich besonders für Behälter, die einen weitgehend ebenen Boden brauchen, wie z. B. Waschmaschinen, Geschirrspülmaschinen o. ä. Bei geringeren Beheizungsleistungen ist diese ebene Ausführung meist ausreichend, ebenso, wenn der Deckel einen relativ großen Durchmesser haben kann.

Für höhere Leistungen kann vorteilhaft ein Einsatz verwendet werden, der napf- oder topfförmig ausgebildet ist. Rohrheizkörper können dabei im Inneren des Einsatzes, vorzugsweise im Boden- und Mantelbereich aufgelötet sein. Die Außenfläche des Einsatzes ist dabei dem Behälterinneren zugewandt, so daß auch hier die Rohrheizkörper, obwohl sie tatsächlich ins Behälterinnere hineinragen, im « trockenen » Bereich, nämlich an den Innenflächen des Topfes oder Napfes, angelötet sind.

Um hierbei zu vermeiden, daß die Behälterwandung eine zu hohe Temperatur erhält, da diese Behälterwandungen heutzutage häufig aus Kunststoff hergestellt sind, ist es vorteilhaft, wenn der Einsatz in seinem Mantelbereich einen Abstand von der Behälterwand hat.

Zu einer guten Wärmeübertragung trägt es bei, wenn die Rohrheizkörper eine im wesentlichen ebene Fläche haben, die mit dem Einsatz verlötet ist. Die Rohrheizkörper haben dann einen halbkreisförmigen oder dreieckigen Querschnitt, dessen größte ebene Seite der Wandung des Einsatzes zugekehrt ist. Diese Fläche wird durch Verpressen des fertigen Rohrheizkörpers erzeugt und ist auch für den Rohrheizkörper im übrigen sehr vorteilhaft, weil dadurch eine zusätzliche Verdichtung erfolgt.

Der napf- oder topfförmige Einsatz kann vorzugsweise durch einen Deckel abgeschlossen sein, durch den ggf. die elektrischen Zuleitungen und hydraulische oder mechanische Regelübertragungen hindurchragen. Beispielsweise würde der Trockengehschutz, wenn er z. B. als Temperaturbegrenzer mit Stabfühler ausgerüstet ist, mit seinem Schalterkopf außerhalb des Deckels angeordnet sein und der Stab durch den Deckel hindurchragen. Das gleiche gilt für einen Regelfühler für den Behälterinhalt, der vorzugsweise die Flüssigkeit im Zentrum des Behälters messen sollte, und daher z. B. in einem Fühlerschutzrohr angeordnet sein kann, das dicht in die Einsatzwandung eingesetzt ist, aber weit in den Behälter hineinragt. Dadurch werden weitere Durchbrüche für die Regelfühler vermieden.

In dem Einsatz kann eine Isolation angeordnet sein, die dann vom Deckel abgeschlossen wird.

Um eine besonders gute Wärmeübertragung zwischen den Rohrheizkörpern und dem zylindrischen Mantel zu erreichen, kann der Rohrheizkörper als Wendel gewickelt sein und vor dem Verlöten unter eigener Vorspannung an die Einsatzwandung angedrückt sein. Dadurch erfolgt die Verlötung, die meist in einem Lötofen erfolgt, besonders gut und unter Zwischenschaltung einer möglichst geringen Menge von Lotmaterial zwischen den Rohrheizkörper und die Wandung.

Zum gleichen Zwecke ist es besonders vorteilhaft, wenn zwischen benachbarten Rohrheizkörperwindungen ein vorzugsweise spiralig oder wendelförmiger Zwischensteg eingelötet ist. Dieser Zwischensteg, der aus einem aufrecht stehenden, entsprechend gewickelten Blechstreifen bestehen kann, schafft einen sehr engen Spalt zwischen sich und dem jeweiligen Rohrheizkörper, der bei der Verlötung vollaufen kann, so daß der Rohrheizkörper mit der Wandung des Einsatzes einen kompletten Block bildet, bei dem der Rohrheizkörper um nahezu 3/4 seines Umfanges umschlossen ist.

Es ist vorteilhaft, daß selbst ein Durchbrennen des Rohrheizkörpers nicht dazu führt, daß die Behälterflüssigkeit mit den elektrischen Leitungen in Verbindung kommt.

Bevorzugte Ausführungsbeispiele der Erfindung sind in der Zeichnung dargestellt und werden im folgenden näher erläutert. In der Zeichnung zeigen jeweils schematisch in Schnitt :

Figur 1   den unteren Bereich eines Behälters mit einem Heizelement,

Figur 2   eine Trommelwaschmaschine, in deren Bodenbereich ein Heizelement eingebaut ist,

Figuren 3 bis 11   Details von Heizelementen und ihren Befestigungen.

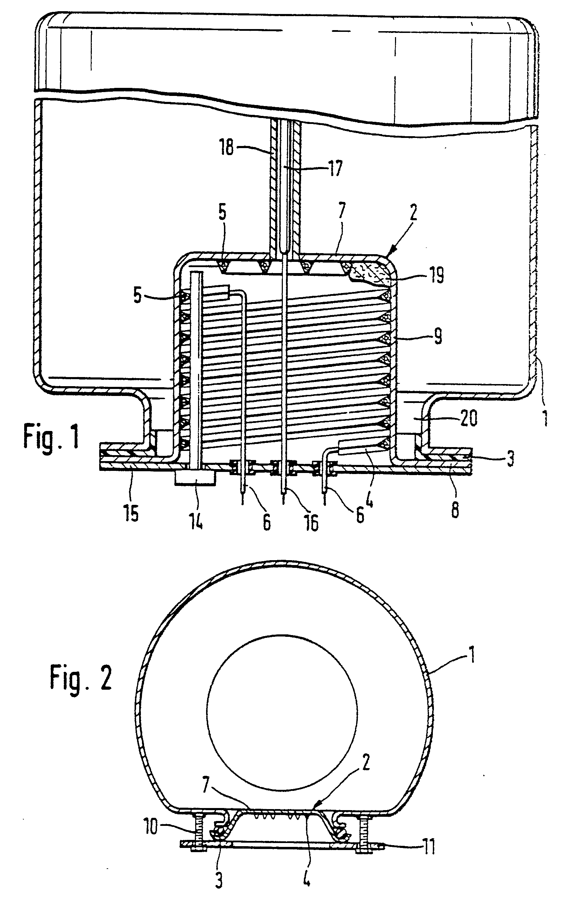

Bei den in Figuren 1 und 3 bis 8 dargestellten Behältern 1 handelt es sich jeweils um im wesentlichen zylindrisch ausgebildete, aufrecht stehende Behälter. Bei dem in Fig. 2 dargestellten Behälter handelt es sich dagegen um einen im wesentlichen zylindrisch ausgebildeten, jedoch liegend angeordneten Behälter, z. B. einem Waschmaschinen-Bottich. In den dargestellten Behältern 1 ist jeweils eine im wesentlichen kreisförmige Bodenöffnung 20 vorgesehen, die von einem Einsatz 2 unter Zwischenlage einer Dichtung 3 verschlossen ist. Auf den Außenseiten, d. h. auf den vom Inneren der zugehörigen Behälter 1 abgewandten Seite der Einsätze 2 sind im Querschnitt im wesentlichen dreieckförmige Rohrheizkörper 4 an einer Flachseite angelötet. Zur Stromversorgung der in den Rohrheizkörpern 4 isoliert eingebetteten wendelförmigen Heizdrähte 5 sind Leitungen 6 vorgesehen.

Die einzelnen Einsätze 2 weisen jeweils eine ebene, im wesentlichen kreisförmig ausgebildete Bodenplatte 7 auf und sind ansonsten jeweils napf- oder topfartig ausgebildet, d. h. sie haben einen umlaufenden Rand 8, der sich gegen die Dichtung 3 abstützt. An diesem Rand 8 schließt sich ein umlaufender Mantel 9 an, der in die Bodenplatte 7 übergeht (vgl. Fig. 1). Bei der in Fig. 1 dargestellten Ausführungsform ist der Mantel 9 im wesentlichen zylinderförmig ausgebildet, d. h. er schließt mit der Bodenplatte 7 einen rechten Winkel ein. Bei den übrigen Ausführungsformen ist der Mantel 9 kegelstumpfförmig ausgebildet, d. h. er schließt hier mit der zugehörigen Bodenplatte 7 einen von 90° abweichenden Winkel ein.

Bei den Figuren 1 bis 7 wird der Einsatz 2 jeweils durch Befestigungselemente 10 von außen gegen den Rand der Behälteröffnung gedrückt, wobei die Dichtung 3 jeweils für eine sichere Abdichtung sorgt. Bei der in Fig. 2 dargestellten Ausführungsform greifen die als Stehbolzen ausgebildeten Befestigungselemente 10 an einem brückenartig ausgebildeten Gegenflansch 11 an, der von ihnen gegen den Einsatz-Rand gedrückt wird.

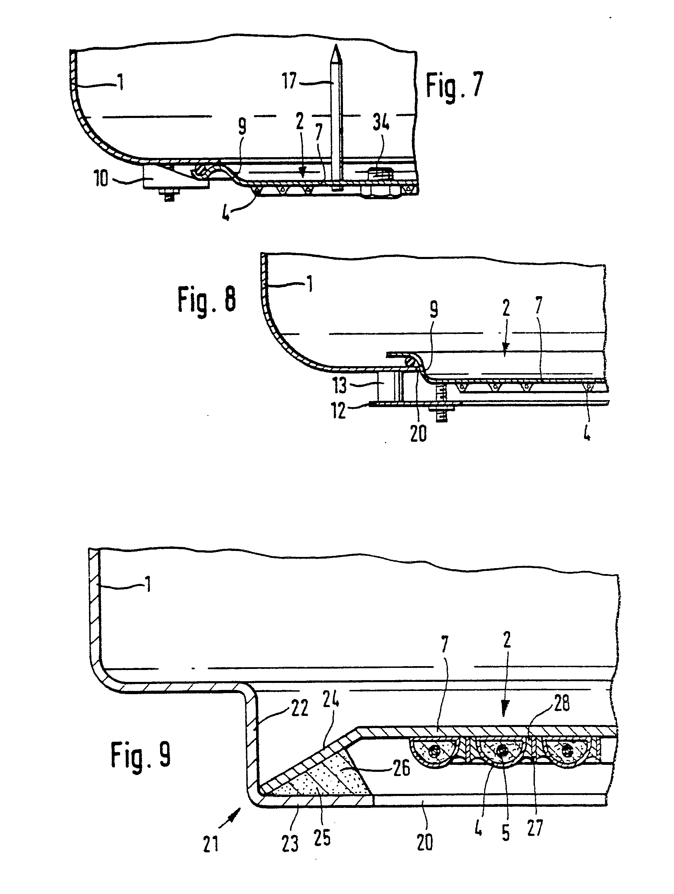

Bei Fig. 8 sind die Bodenöffnung und der ihr zugeordnete Einsatz nicht kreisförmig, sondern etwa oval ausgebildet, und der Einsatz wird nicht von außen, sondern von innen gegen den Rand der Behälteröffnung gedrückt. Dem Einsatz 2 ist bei der Ausführungsform nach Fig. 8 ein Gegenflansch 12 zugeordnet, dessen Randbereiche auf Distanzstücken 13 aufliegen.

Bei Fig. 1 ist der Einsatz 2 durch einen ebenen Deckel 15 abgeschlossen, durch den die Zuleitungen für den Rohrheizkörper 4 und der stabförmige Temperaturfühler eines Temperaturbegrenzers 14 hindurchragen, so daß der Schalterkopf des Temperaturbegrenzers 14 außerhalb des Deckels 15 liegt. Der Temperaturfühler des Temperaturbegrenzers, der an die Rohrheizkörper angrenzend verläuft, ist mit den Rohrheizkörpern und mit dem Einsatz thermisch verbunden und außerhalb des zu beheizenden Mediums so angeordnet, daß er die Temperatur der Beheizung abfühlt. Außerdem ragt durch den Deckel 15 die Zuleitung 16 zu einem Regelfühler 17, der in einem von der Bodenplatte 7 abragenden, gegenüber dem Behälterinneren abgeschlossenen Fühlerschutzrohr 18 untergebracht ist. Der Deckel 15 ist mit nicht dargestellten Schrauben mit dem umgebogenen Rand der Behälteröffnung verschraubt und kann eine eingelegte Isolation 19 abschließen.

Bei Fig. 2 weist die Behälteröffnung einen nach außen, in der Zeichnung nach unten, umgebogenen Rand auf, dessen Höhe etwa der Höhe des Mantels 9 des Einsatzes 2 entspricht, so daß die Bodenplatte 7 des Einsatzes 2 etwa in der gleichen Ebene liegt, wie der Boden des Behälters 1. Eine Zentrierung des Einsatzes 2 erfolgt hier durch das Zusammenwirken des Behältermantels 9 mit dem Rand der Behälteröffnung.

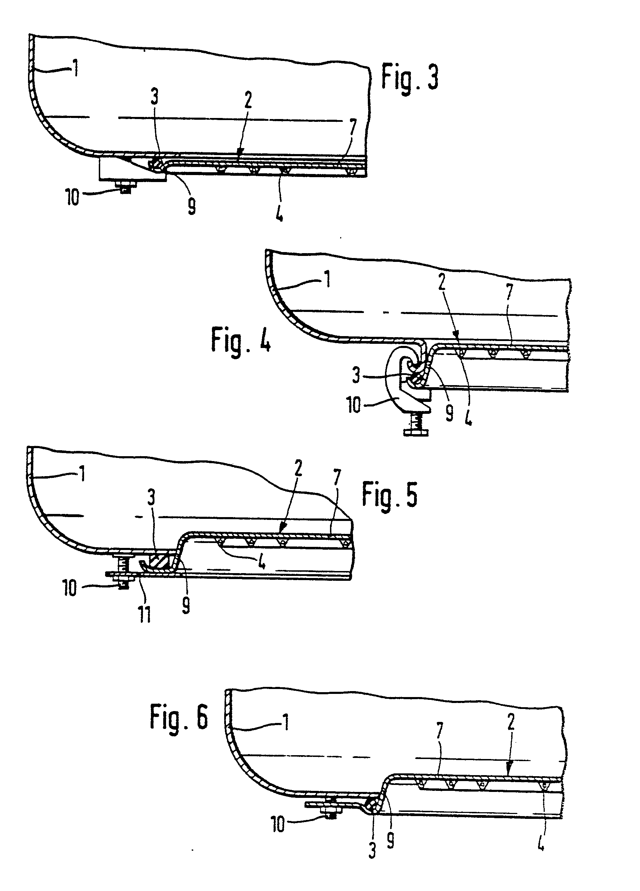

Bei Fig. 3 besteht der Einsatz 2 aus einer ebenen Bodenplatte 7, deren Rand unter Ausbildung einer zum Behälterboden hin offenen Ringnut zur Lagerung der Dichtung 3 profiliert ausgebildet ist. Auch hier liegt die Bodenplatte 7 im wesentlichen in der gleichen Ebene wie der übrige Behälterboden. Eine Zentrierung des Einsatzes 2 erfolgt hier durch Befestigungselemente 10, die hier als keilförmige Spannstücke ausgebildet sind, die von Stehbolzen gespannt werden.

Bei Fig. 4 weist die Behälteröffnung wiederum einen nach außen umgebogenen Rand auf, gegen den der nach außen umgebogene Rand des hier napfartig ausgebildeten Einsatzes 2 durch als Spannhaken oder -bügel ausgebildete Befestigungselemente 10 gedrückt wird, die den umgebogenen Rand der Behälteröffnung hintergreifen und über Spannschrauben festgezogen werden. Eine Zentrierung des Einsatzes 2 erfolgt hier durch das Zusammenwirken der Wandung 9 des Einsatzes 2 mit dem Rand der Behälteröffnung.

Bei Fig. 5 ist der Einsatz 2 wiederum napfartig ausgebildet. Auch hier wird der Einsatz 2 durch das Zusammenwirken seines Mantels 9 mit dem unprofilierten Rand der Behälteröffnung zentriert. Die Bodenplatte 7 liegt hier jedoch oberhalb des Behälterbodens. Zur Befestigung des Einsatzes 2 am Behälter 1 ist hier ein ringförmiger Gegenflansch 11 vorgesehen, der den umgebogenen Rand des Einsatzes 2 gegen den Behälterboden drückt. Als Befestigungselemente 10 sind hier, wie bei Fig. 2, am Behälterboden befestigte Schraubbolzen vorgesehen, die durch Löcher im Gegenflansch 11 hindurchragen und mit Muttern verschraubbar sind.

Bei Fig. 6 liegt die Bodenplatte 7 des Einsatzes 2 wiederum etwas oberhalb des Behälterbodens. Der Einsatz 2 zentriert sich durch das Zusammenwirken des Mantels 9 des Einsatzes 2 mit dem Rand der Behälteröffnung.

Bei Fig. 7 liegt die Bodenplatte 7 des Einsatzes 2 unterhalb des Behälterbodens. Zur Befestigung des Einsatzes 2 am Behälter 1 sind hier Befestigungselemente 10 vorgesehen, die wie bei Fig. 3 als keilförmige Spannstücke ausgebildet sind. In Fig. 7 sind schematisch ein Regelfühler 17 und eine Ein- und/oder Ablaßschraube 34 dargestellt, über die der Behälter 1 befüllt oder entleert werden kann, ohne den Einsatz 2 abzunehmen.

Bei Fig. 8 liegt die Bodenplatte 7 des Einsatzes 2 wiederum unterhalb des Bodens des Behälters 1. Der Einsatz 2 wird von innen gegen den Behälterboden bzw. die zwischen ihm und dem Behälterboden angeordnete Dichtung 3 gedrückt. Der Einsatz 2 und die zugehörige Behälteröffnung 20 sind langgestreckt, beispielsweise elliptisch ausgebildet, um den Einsatz einführen zu können. Zur Befestigung des Einsatzes 2 dient ein Gegenflansch 12, dessen Rand auf Distanzstücken 13 aufliegt. Am Einsatz 2 sind hier Schraubbolzen befestigt, die durch den Gegenflansch 12 hindurchragen und mit Muttern verschraubt werden können. Ein Anziehen dieser Muttern bewirkt, daß der Einsatz 2 von innen gegen den Behälterboden bzw. den Rand der Behälterboden-Öffnung gedrückt wird. Diese Ausführung hat den Vorteil, daß der Druck im Behälter die Anpressung der Dichtung erhöht.

Die Details von Fig. 9 bis 11 zeigen eine Verbindung zwischen Behälter 1 und Einsatz 2 mittels eines Klebstoffes 26, der gleichzeitig den Einsatz an dem Behälter befestigt und diese Verbindung abdichtet. Es kann beispielsweise ein Silikon-Kautschuk als Klebstoff verwendet werden. Derartige Klebstoffe können ohne Beeinträchtigung ihrer Eigenschaften Temperaturen bis über 200 °C (ca. 470 K) ertragen, was bei Heizelementen für Wasser mehr als ausreichend ist, da ohnehin ein Überhitzungs- bzw. Trockengehschutz vorgesehen ist.

Bei Fig. 9 hat der Behälter 1 eine langgestreckte, z. B. ovale Behälteröffnung 20, die von einem Rand 21 umgeben ist, der einen zylindrischen nach außen weisenden Stutzenabschnitt 22 und einen nach innen weisenden Flanschabschnitt 23 hat. Wie in Fig. 8 stützt sich der nach unten abgeschrägte Rand 24 des im übrigen als flacher Boden 7 ausgebildeten Einsatzes auf dem Flanschabschnitt 23 vom Behälterinneren her ab. Die entstehende umlaufende, keilförmige Fuge 25 zwischen Flanschabschnitt 23 und Rand 24 ist mit Klebstoff 26 ausgefüllt. Vorteilhaft füllt der Klebstoff weitgehend nur den zum Behälteräußeren weisenden Teil des Verbindungsbereiches, so daß dem Behälterinneren kaum Klebstoff zugewandt ist, an den daher geringere Anforderungen bezüglich seiner chemischen Neutralität zu stellen sind.

An den Boden 7 sind vom Äußeren her Rohrheizkörper 4 mit einer abgeflachten Seite angelötet, die im übrigen einen kreiszylindrischen Mantel haben. Zwischen die einzelnen spiralförmigen Rohrheizkörperwindungen sind senkrecht zum Boden stehende Stege 27 eingelötet, die aus einem spiralig gewundenen Blechband bestehen, eine etwas geringere Höhe haben als die Rohrheizkörper und den Zwischenraum zwischen den Rohrheizkörperwindungen so weit verringern bzw. unterteilen, daß das Lot 28 den Raum zwischen den Rohrheizkörpern fast bis zur freien Kante der Stege füllt. Dadurch ist die Wärmeübertragung zwischen Rohrheizkörper 4 und Einsatz 2 besonders gut.

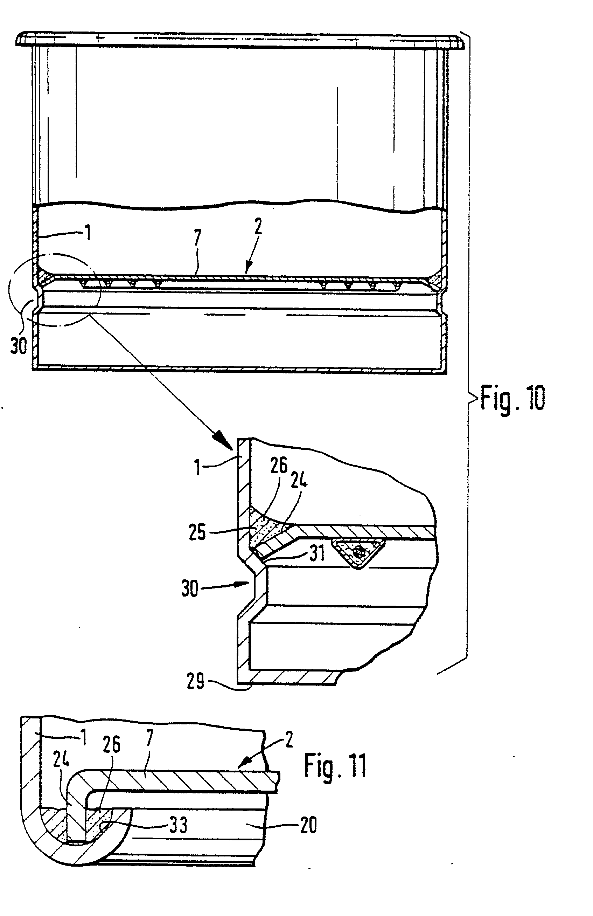

In Fig. 10 ist der Behälter 1 ein Topf, bei dem der Einsatz 2 in einigem Abstand von der Unterkante 29 des zylindrischen Behälters 1 eingesetzt ist, so daß er einen Topfboden bildet, unterhalb dessen noch ein vorstehender Rand vorgesehen ist. Ein Vorsprung 30 ist durch eine umlaufende Einschnürung oder Einprägung gebildet, auf dessen oberer schräger Schulter 31 der nach unten abgeschrägte Rand 24 des Einsatzes liegt, der entsprechend Fig. 9 ausgebildet ist. Klebstoff 26 füllt die dreiecksförmige Fuge 25 zwischen der Behälterwand und dem Rand 24.

In Fig. 11 hat der Einsatz 2 einen im wesentlichen rechtwinklig nach unten gebogenen Rand 24, der in einer mit Klebstoff 26 gefüllten Ringnut 33 mit halbkreisförmigem Querschnitt liegt, die von der Behälterwand 1 nach innen gebördelt ist und die Behälteröffnung 20 umgibt. Der Klebstoff umgibt dicht den unteren Rand 24. Der Klebstoff 26 wird vorher in die Ringnut eingebracht und danach wird der Rand 24 des Einsatzes 2 hineingedrückt.

Der Klebstoff sorgt für eine feste und dichte Verbindung, spart Bauteile und Montagezeit und vermindert das Risiko elektrolytischer Korrosion, insbesondere, wenn dafür gesorgt wird, daß er Einsatz und Behälter elektrisch voneinander isoliert. Er lässt auch eine gute Verbindung zwischen unterschiedlichen Materialien zu, beispielsweise den Einbau eines Blecheinsatzes in einen Kunststoffbehälter.

**Patentansprüche**

1. Heizelement zur Beheizung von Behältern (1) unter Verwendung von Rohrheizkörpern (4), die auf die Außenseite eines Behälterwandteils großflächig anliegend aufgelötet sind, dadurch gekennzeichnet, daß der Behälterwandteil ein abgedichtet in eine Behälteröffnung (20) eingesetzter, aus Metall bestehender Einsatz (2) ist und daß am Einsatz ein Temperaturbegrenzer (14) vorgesehen ist, dessen Temperaturfühler mit dem Rohrheizkörper (4) sowie dem Einsatz (2) thermisch verbunden außerhalb des zu beheizenden Mediums an den Rohrheizkörper (4) außen angrenzend angeordnet ist.

2. Heizelement nach Anspruch 1, dadurch gekennzeichnet, daß der Einsatz (2) aus einem im wesentlichen ebenen Scheibe (7) besteht, die in ihrem Randbereich eine Profilierung aufweist.

3. Heizelement nach Anspruch 1, dadurch gekennzeichnet, daß der Einsatz (2) napf- oder topfförmig ausgebildet ist und die Rohrheizkörper (4) im Inneren des Einsatzes (2) im Boden- und-/oder Mantelbereich (7, 9) aufgelötet sind und daß die Außenfläche des Einsatzes (2) dem Behälterinneren zugewandt ist, wobei vorzugsweise der Einsatz (2) in seinem Mantelbereich (9) einen Abstand von der Behälterwand hat.

4. Heizelement nach einem der vorhergehenden Ansprüche, dadurch gekennzeichnet, daß die Rohrheizkörper (4) eine im wesentlichen ebene Fläche aufweisen, die mit dem Einsatz (2) verlötet ist.

5. Heizelement nach einem der vorhergehenden Ansprüche, dadurch gekennzeichnet, daß der Einsatz (2) durch einen Deckel (15) abgeschlossen ist, durch den die elektrischen Zuleitungen und ggf. hydraulische oder mechanische Regelübertragungen hindurchragen und daß vorzugsweise in dem Einsatz (2) eine Isolation (19) angeordnet ist.

6. Heizelement nach einem der Ansprüche 3 bis 5, dadurch gekennzeichnet, daß die Rohrheizkörper (4) durch eine Wendel gebildet sind, wobei sich die Wendel vor dem Verlöten unter eigener Vorspannung an die Einsatzwandung andrückt.

7. Heizelement nach Anspruch 6, dadurch gekennzeichnet, daß zwischen benachbarten Rohrheizkörper-Windungen ein im wesentlichen senkrecht zum Boden oder Mantel stehender Zwischensteg eingelötet ist.

8. Heizelement nach einem der vorhergehenden Ansprüche, dadurch gekennzeichnet, daß der Einsatz (2) mittels eines die Dichtung bildenden Klebstoffes (26) in den Behälter (1) eingesetzt ist.

9. Heizelement nach Anspruch 8, dadurch gekennzeichnet, daß der Rand (24) des Einsatzes auf einem im Bereich der Behälteröffnung vorgesehenen umlaufenden Vorsprung (23, 30) des Behälters (1) aufliegt und eine entstehende Fuge (25) mit dem Klebstoff (26) ausgefüllt ist, wobei vorzugsweise der Einsatz (2) auf der zum Behälterinneren weisenden Seite des Vorsprunges (23, 30) aufliegt.

## Claims

1. Heating element for heating receptacles (1) using tubular heaters (4), which are soldered in large-area engaging manner to the outside of a receptacle wall part characterized in that the receptacle wall part is a metal insert (2) inserted in sealed manner into a receptacle opening (20) and that on the said insert is provided a thermal cut-out (14), whose temperature sensor thermally connected to the tubular heater (4) and the insert (2) is externally arranged adjacent to the tubular heater (4) outside the medium to be heated.

2. Heating element according to claim 1, characterized in that the insert (2) comprises a substantially planar disk (7), which has a profiling in its edge region.

3. Heating element according to claim 1, characterized in that the insert (2) is bowl or cup-shaped and the tubular heaters (4) are soldered in the interior of insert (2) in the base and/or circumferential casing area (7, 9) and that the outer face of insert (2) faces the interior of the receptacle, the insert (2) preferably being spaced in its circumferential casing area (9) from the receptacle wall.

4. Heating element according one of the preceding claims, characterized in that the tubular heaters (4) have a substantially planar face soldered to the insert (2).

5. Heating element according to one of the preceding claims, characterized in that the insert (2) is terminated by a cover (15) through which pass the electric leads and optionally hydraulic or mechanical control transfers and that preferably an insulation (19) is provided in insert (2).

6. Heating element according to one of the claims 3 to 5, characterized in that the tubular heaters (4) are formed by a coil, which presses against the insert wall under its own pretension prior to soldering.

7. Heating element according to claim 6, characterized in that an intermediate web, substantially perpendicular to the base or circumferential casing, is soldered between adjacent tubular heater windings or turns.

8. Heating element according to one of the preceding claims, characterized in that the insert (2) is inserted in receptacle (1) by means of an adhesive (26) forming the seal.

9. Heating element according to claim 8, characterized in that the edge (24) of the insert rests on an all-round projection (23, 30) of receptacle (1) provided in the vicinity of the receptacle opening and a joint (25) formed is filled with the adhesive (26), the insert (2) preferably resting on the side of projection (23, 30) directed towards the interior of the receptacle.

## Revendications

1. Elément de chauffage destiné au chauffage de récipients (1), utilisant des radiateurs tubulaires (4) soudés directement sur une grande surface sur le côté extérieur d'une partie de paroi de récipient, caractérisé en ce que la partie de paroi de récipient consiste en une garniture (2) en métal insérée de façon étanche dans une ouverture de récipient (20) et en ce qu'un limiteur de température (14) est prévu sur la garniture, dont la sonde de température reliée thermiquement au radiateur tubulaire (4) ainsi qu'à la garniture (2), est agencée à l'extérieur du fluide à chauffer, extérieurement limitrophe au radiateur tubulaire (4) extérieurement.

2. Elément de chauffage selon la revendication 1, caractérisé en ce que la garniture (2) consiste en un disque (7) essentiellement plat, qui présente un profilage dans sa zone marginale.

3. Elément de chauffage selon la revendication 1, caractérisé en ce que la garniture (2) est conçue en forme de cuvette ou de pot et les radiateurs tubulaires (4) sont soudés à l'intérieur de la garniture (2) dans la zone de fond et/ou d'enveloppe (7, 9), et en ce que la surface extérieure de la garniture (2) est dirigée vers l'intérieur du récipient, la garniture (2) étant de préférence dans sa zone d'enveloppe (9), à une certaine distance de la paroi du récipient.

4. Elément de chauffage selon l'une des revendications précédentes, caractérisé en ce que les radiateurs tubulaires (4) présentent une surface essentiellement plane, soudée à la garniture (2).

5. Elément de chauffage selon l'une des revendications précédentes, caractérisé en ce que la garniture (2) est fermée par un couvercle (15) à travers lequel passent des conduites électriques et éventuellement des organes de transmission de régulation hydrauliques ou mécaniques, et en ce que de préférence une isolation (19) est agencée dans la garniture (2).

6. Elément de chauffage selon l'une des revendications 3 à 5, caractérisé en ce que les radiateurs tubulaires (4) sont conçus sous forme d'une hélice, l'hélice exerçant une pression sur la paroi de la garniture par sa propre pré-tension en amont de la soudure.

7. Elément de chauffage selon la revendication 6, caractérisé en ce qu'entre des serpentins limitrophes de radiateurs tubulaires est soudée une entretoise essentiellement perpendiculaire au fond ou à l'enveloppe.

8. Elément de chauffage selon l'une des revendications précédentes, caractérisé en ce que la garniture (2) est insérée dans le récipient (1) au moyen d'une matière collante (26) formant l'étanchéité.

9. Elément de chauffage selon la revendication 8, caractérisé en ce que le bord (24) de la garniture repose sur une saillie (23, 30) du récipient (1), saillie s'étendant sur la périphérie de l'ouverture du récipient et une jointure produite (25) est remplie de matière collante (26), la garniture (2) reposant de préférence sur le côté de la saillie (23, 30) dirigée vers l'intérieur du récipient.

Fig. 1

Fig. 2

0 097 265

Fig. 3

Fig. 4

Fig. 5

Fig. 6

2

Fig. 7

Fig. 8

Fig. 9

Fig. 10

Fig. 11